# EUROPEAN PATENT SPECIFICATION

(11) **EP 1 999 926 B1**
(45) Date of publication and mention of the grant of the patent: **14.03.2012**
(21) Application number: 07730640.5
(22) Date of filing: 22.03.2007
(51) Int. Cl.: H04L 29/06, H04L 29/08, H04L 12/28, H04L 12/56

(54) **IMPROVED SOLUTION FOR CONNECTIVITY**
VERBESSERTE LÖSUNG FÜR KONNEKTIVITÄT
SOLUTION AMÉLIORÉE DE CONNECTIVITÉ

(30) Priority: 24.03.2006 FI 20065195
(43) Date of publication of application: 10.12.2008
(73) Proprietor: TELIASONERA AB, 10663 Stockholm (SE)
(72) Inventor: VITIKKA, Ilpo, FI-00100 Helsinki (FI); MÄKELÄ, Antti, FI-33720 Tampere (FI)
(74) Representative: Äkräs, Tapio Juhani
(86) International application number: PCT/FI2007/050153
(87) International publication number: WO 2007/110473

(56) References cited:
- EP-A1- 1 119 137
- EP-A1- 1 496 668
- WO-A2-03/105418
- US-A1- 2003 158 974
- US-A1- 2005 071 487
- US-A1- 2006 007 478
- PABUWAL N.: 'Emulating Bluetooth over 802.11', [Online] 08 October 2001, Retrieved from the Internet: <URL:http://www.mhonarc.axis.se/bluetooth-d ev/msg02872.html>

## Description

### FIELD OF THE INVENTION

The present invention relates to telecommunications and especially to a method, a communication system, and a mobile station according to the preambles of the independent claims.

### BACKGROUND OF THE INVENTION

Nowadays people wish to be more and more mobile and increase their ability to interact with each other, remove distance as a barrier. Mobile users are already used to being able to make and receive voice calls practically anywhere they are. A number of technologies that allow more bandwidth and thus other type of mobile services are consistently emerging, as well. Bluetooth is a new technology using short-range radio links, originally intended to replace the cables connecting electronic devices. Bluetooth radio modules operate in the unlicensed ISM band at 2.4GHz, and avoids interference from other signals by hopping to a new frequency after transmitting or receiving a packet. Bluetooth is considered as a low-power, short-range technology for ad hoc cable replacement; it enables people to wirelessly combine devices wherever they bring them. Most mobile stations today provide Bluetooth connectivity.

Bluetooth is simple to use and has become very widely accepted, especially by users of mobile devices, like mobile stations, Personal Digital Assistants and the like. Additionally, a variety of Bluetooth applications have been introduced to the market and they have also been very eagerly taken into use. Examples of such comprise applications for personal data interchange, specifically electronic business cards, applications for exchanging data about forthcoming appointments, applications for accessing and synchronizing information, among others.

However, since the range of Bluetooth radios is very limited, the use of the applications has been restricted to a limited group of communication instances. The wish of the users has, for a long time, been to extend the familiar and easy-to-use Bluetooth applications with the broader range of other access types.

The typical way to deal with different access types has been to utilize tunneling, i.e. to transport foreign protocols transparently over an intermediate media by way of encapsulation. In conventional solutions context messages of a Bluetooth application are thus encapsulated within IP frames and transferred over an IP connection. Towards the user this provides, however, a completely different user experience and service model. For example, initiation of applications is not as straightforward, since an IP connection is required. For a large group of users, establishing an IP connection is already considered an additional task and thus an unnecessary nuisance. Since the comfortable user experience and very simple service model are exactly the key factors that have contributed to the success of the Bluetooth applications, there are not many reasons that promote the use of such combined access configuration. Additionally, many of the applications are designed for use only over a serial connection, and they do not even adapt to tunneling.

On the other hand, 802.11 technology (also called as Wireless Local Area Network, WLAN technology) is also strongly entering the world of mobile communication users. 802.11 b is a moderate-range, moderate-speed technology based on Ethernet, and operates also in the unlicensed ISM band at 2.4GHz. It allows people to wirelessly access an organizational network throughout a campus location. Almost all new laptops already comprise an 802.11 unit and such units are becoming more common in advanced mobile stations, as well. The number of users that wish to have also WLAN connectivity in their user equipment is constantly rising. The physical layers of Bluetooth and 802.11 are different, which means that in order to utilize both of these technologies, one needs to incorporate different radio units into their mobile stations.

In some applications, for example in mobile phones and personal digital assistants (PDA), the size and the weight of the equipment are strictly optimized. It is not at all advantageous to include two complementing radio units for such similar needs in such space and power challenged environment. Bluetooth technology is considered very simple and easy to use, and it has clearly been well adopted by most of the mobile users. Now that the trend is also clearly toward the 802.11 technologies, the device manufacturers have no other alternative than to include radio units for both access types within their mobile devices.

Document US2003/158974 discloses an application program interface for accessing a wireless RF input/output facility or port in a computer. Software installed in an operating system acts as virtual COM port or proxy for an API and substitutes in its place an API for designated I/O facility by emulating the functionality of the serial port API.

### BRIEF DESCRIPTION OF THE INVENTION

An object of the present invention is thus to provide an improved solution for connectivity within a finite region of coverage. The objects of the invention are achieved by a method and an arrangement, which are characterized by what is stated in the independent claims. The preferred embodiments of the invention are disclosed in the dependent claims.

The invention is based on the idea of arranging for a user of a mobile station a possibility to utilize serial link emulation in a connection of wireless local area networking.

An advantage of the invention is that simple user experience of serial connection type applications may be provided within a wider region of coverage. A user may use the familiar applications in a consistent way without worrying about the creation of IP connection or basically even needing to know which kind of radio units his or her user equipment comprises. However, the very short range earlier associated with serial connection type of applications does not limit the use of applications to the near vicinity of communicating unit.

### BRIEF DESCRIPTION OF THE DRAWINGS

In the following the invention will be described in greater detail by means of preferred embodiments with reference to the attached drawings, in which
Figure 1 illustrates a system for distributing local content for mobile stations;
Figure 2 illustrates an example of a use case;
Figure 3 illustrates the protocol stack corresponding to the embodiments of Figures 1 or 2; and
Figure 4 illustrates a functional architecture of a mobile station.

### DETAILED DESCRIPTION OF THE INVENTION

The present invention is applicable to any two wireless communication technologies whose essential functions may be mapped, and of which the one providing the upper layer functions comprises serial link emulation functionality. Examples of the upper layer technologies comprise Bluetooth, and any derivatives thereof. Examples of the lower layer technologies comprise the Institute of Electrical and Electronics Engineers Inc. (IEEE) 802.11 standard series 802.11a, 802.11b, 802.11g, 802.11h, 802.11n, as well as and Ultra wideband (UWB) and IEEE 802.16 point-to-multipoint broadband wireless access standard (also called as Wimax). In the following, the invention is illustrated by means of a mobile station that is able to utilize IEEE 802.11 technology without, however, limiting the invention to the characteristic terms descri b-ing logical elements used herein.

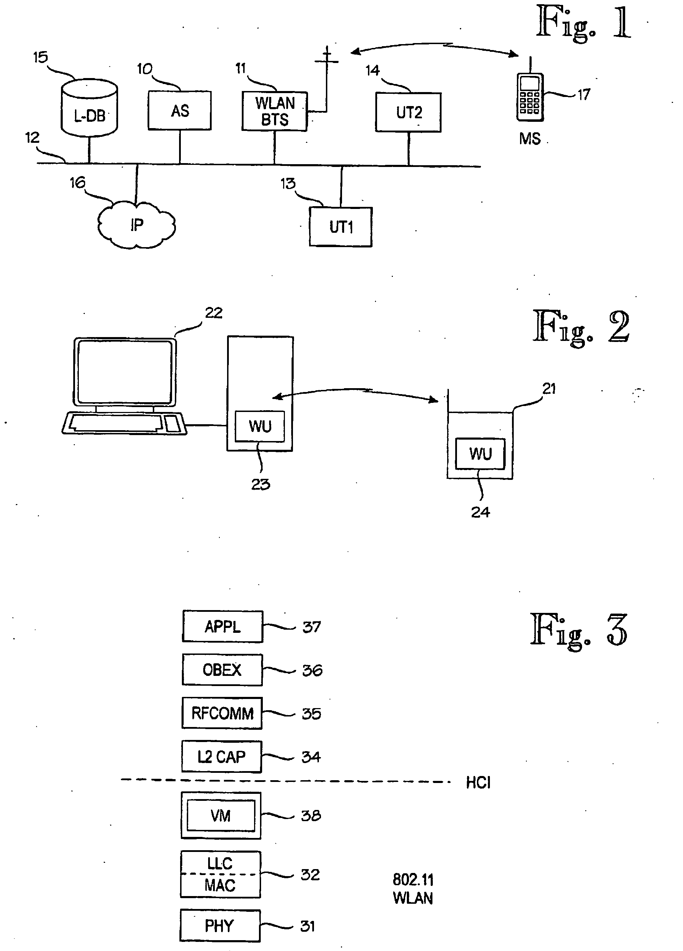

As an embodiment of the invention, Figure 1 illustrates a system for distributing local content for mobile stations that reside in the geographic area where such information is relevant. This geographical area is essentially grater than e.g. the range of typical Bluetooth devices. Such system could be, for example, a server providing results of a game or an athletic competition, or time-tables in the surroundings of a particular station, or any such information that is necessary or advantageous for mobile users in the close surroundings of the system. The system may, at minimum, be implemented by means of an application server 10 and a WLAN base station 11 connected to it. The WLAN base station 11 states the logical element, and may physically be implemented as a separate element connected with the application server 10, or integrated within the application server 10. Basically the application server may be a single user terminal comprising a WLAN card that is programmed to operate as a WLAN base station. The application server 10 may be an independent 11 element, or it may be connected to a local area network (LAN) 12, for example an IEEE 802.3 standard based Ethernet. The application server may thus exchange information with other user terminals 13, 14, and/or local databases 15 connected to the LAN 12. The LAN 12 may be connected to an external wide area network (WAN) 16, like Internet, so that application server 10 may also retrieve information from other external information sources. In the following, the combination of the application server 10 and the WLAN base station 11 is called as an access point.

A mobile station 17 of Figure 1 is primarily arranged to operate in a cellular network. Examples of such cellular networks comprise a GSM mobile communications system (Global System for Mobile Communications, GSM), a Universal Mobile Telecommunications System (UMTS), and mobile communication systems corresponding to the global GSM system (Global System for Mobile Communications), such as GSM 1800 and PCS (Personal Communications System), and systems based on the above systems, such as GSM 2+ systems. In general, mobile stations may access network services also during movement. A portable station is considered to move from point to point but is only used at a fixed point. It should be noted that even if the invention is illustrated in a context of a mobile station, it may be applied in mobile, portable stations and even fixed stations.

The cellular coverage provides wireless services in a wide area, but for local services also a less expensive and higher data rate communication mode would be preferred. Therefore, the mobile station according to the embodiment of the invention is additionally equipped with means for wireless local area networking. In this example these means comprise a radio unit and a standardized functionality for wireless local area networking. The configuration of the embodied mobile station is discussed in more detail later in the text.

Each WLAN network uses a service set identifier (SSID), which corresponds to the name of the wireless network. For easy connection of WLAN clients, most access-points are configured to broadcast this SSID, so that clients may scan for available WLAN networks. When the mobile station 17 enters the coverage of the WLAN base station 11, it detects the WLAN access point 10, 11, and begins authentication. In 802.11 authentication mechanism a station needs to prove knowledge of a current key of the access point. After a successful authentication, a connection is formed between the access point 10, 11 and the mobile station 17. In a 802.11 type WLAN communication, eavesdropping may be prevented, for example, by the use of a wired equivalent privacy WEP algorithm, which is a Pseudo Random Number Generator (PRNG), initialized by a shared secret key. This PRNG outputs a key sequence of pseudo-random bits equal in length to the largest possible packet, which is combined with the outgoing/incoming packet producing the packet transmitted in the air.

According to the invention, serial link emulation may be provided to the wireless WLAN connection between the mobile station 17 and the access point 10, 11. The implementation of the emulation is discussed in more detail in connection with Figure 3. As a use case, when the user enters the WLAN coverage, he or she has the option to connect conventionally to the WLAN access point 10, 11 and utilize WLAN applications on top of a suitable transport protocol, for example TCP or UDP. However, due to the serial link emulation, the use case may be arranged such that when the access point 10, 11 detects a new mobile station to enter the service area, it initiates an access point application that offers the user direct access to local content. An access point application may, over the serial link emulation transfer a browser for accessing the local content to the mobile station, and an invitation to utilize the local content. All the user needs to do is authorize the setup of the browser, and the service is available to him or her. If the browser has already been installed during a previous visit to the site, the user only needs to be invited to open the browser, after which he or she is able to access the local content again.

Figure 2 illustrates another example of a use case, where a mobile station 21 is synchronized with a computer 22, for example, a fixed network terminal or personal laptop computer. The computer 22 comprises a WLAN unit 23 comprising a WLAN base station, and appropriate functionality to run the WLAN operations according to the present embodiment, as will be discussed later. The configuration of the WLAN unit is, per se, not relevant for the present invention. The WLAN unit may be, for example, a WLAN card inserted in the personal computer, or a combination of separate WLAN base station and installed set of control functions, or the necessary hardware and software may even be fully integrated to the configuration of the personal computer 22.

Correspondingly, the mobile station 21 comprises a WLAN unit 24 that comprises a WLAN radio unit, and appropriate functionality to run the WLAN operations according to the present embodiment, as will be discussed later. A synchronization service is not public, so the WLAN access point does not even have to broadcast its address. The address may, for example, be stored in the mobile station and the user may initiate the synchronization service merely by performing a pre-defined action through the user interface of the mobile station. An example of such action is choosing a defined icon in a menu displayed in a screen of the mobile station. The mobile station and the computer may thus exchange the necessary information within the range of WLAN, however without requiring additional measures and further understanding on the operations by the user.

Figure 3 illustrates the protocol stack corresponding to the embodiments related to the use cases presented in Figures 1 or 2. Figure 3 shows a reference model that defines a theoretical model, in which functions of the mobile station are grouped and shown by a hierarchy of protocol layers. Each layer contains one or more functions contained between an upper and a lower logical boundary. Each layer also uses the services of the lower layers in conjunction with its own functions to create new services, which are made available to the higher layers. Two devices may implement a connection if they are both configured to perform defined corresponding functions of the protocol stack. Protocols may be implemented by hardware, software or a combination of the two.

In this embodiment of the invention, serial link emulation is arranged to a mobile station that provides a standardized functionality for wireless local area networking. This means that in the present embodiment, the lower protocol layers illustrate the functions of standard wireless local area networking, whereas the upper protocol layers illustrate the functions of a standard Bluetooth implementation.

In this embodiment, IEEE 802.11 WLAN is used as an example of the wireless local area networking protocol. The 802.11 standards typically focus on the bottom two levels the ISO model, the physical layer and link layer. Due to the defined protocol structure any LAN application, network operating system, or protocol runs on an 802.11-compliant WLAN as easily as it runs over Ethernet. Implementation of IEEE 802.11 -compliant WLAN functionality is generally known to a person skilled in the art, and will be only summarized briefly in this context.

The physical layer 31 refers to hardware, cabling or a wireless connection. The physical layers defined in 802.11 specifications include two spread-spectrum radio techniques and a diffuse infrared specification. The data link layer 32 provides the functional and procedural means to transfer data between network entities. The data link layer within 802.11 consists of two sublayers: Logical Link Control (LLC) and Media Access Control (MAC). 802.11 uses the same 802.2 LLC and 48-bit addressing as other 802 LANs, which provides for simple bridging from wireless to IEEE wired networks, but the MAC is unique to WLANs. The 802.11 MAC is designed to conventionally support multiple users on a shared medium by having the sender sense the medium before accessing it. Additionally, 802.11 uses a slightly modified protocol known as Carrier Sense Multiple Access with Collision Avoidance (CSMA/CA) or the Distributed Coordination Function (DCF), specifies an optional Request to Send/Clear to Send (RTS/CTS) protocol at the MAC layer, and provides for CRC checksum and packet fragmentation.

In this embodiment, Bluetooth is used as an example of a technology providing serial link emulation. In general, the protocols and layers in the Bluetooth stack comprise four different categories:
- Bluetooth core protocols: Baseband, Link Management Protocol (LMP), Logical Link Control and Adaptation Layer (L2CAP), Service Discovery protocol (SDP).
- Cable replacement protocol: RFCOMM
- Telephony control protocol: TCS Binary
- Adopted protocols: Point-to-point protocol (PPP), Transmission control protocol/Internet protocol (TCP/IP), Multi-Transport Object Exchange (OBEX), Wireless application protocol (WAP), VCard (electronic business card), vCalendar (electronic calendaring), IrMC (synchronizing), Wireless Application Environment (WAE).
The Bluetooth Core protocols are conventionally required by Bluetooth devices while the rest of the protocols are used as needed. The combination of the Cable Replacement protocol, the Telephony Control protocol and an adopted protocol form the application-oriented protocols which enable applications to run over the Bluetooth Core protocols.

In Figure 3, L2CAP 34 represents a connection-based Bluetooth communication protocol that implements multiplexing. L2CAP does not implement flow control, but relies on a reliable device-to-device baseband link conventionally provided by Bluetooth hardware. RFCOMM 35 represents a serial cable emulation protocol and corresponds to a Bluetooth adaptation of the TS07.10 protocol. It acts as a base for COM port emulation facilities and derived point-to-point protocols. Multiplexing and flow control between devices and applications are also implemented here. OBEX 36 represents a session protocol to exchange objects in a simple and spontaneous manner, sometimes called as a lighter version of HTTP. OBEX uses a client-server model and is basically independent of the transport mechanism and transport API, as long as a reliable transport base is provided. OBEX also establishes a model for representing objects and operations, and defines a folder-listing object, which is used to browse the contents of folders on remote device.

APPL 37 represents here a plurality of Bluetooth applications that can be realized on top of the OBEX layer. In the following, the SYNC ML applicable to the use case of Figure 2 is used as an example. SyncML is a synchronisation protocol that can be used between a synchronization client (e.g. a mobile stations) and a synchronization server to communicate the changes that have taken place in the data that is stored within them. The information about the changes, as well as the changed data itself is exchanged through mark-up language documents. These documents are transferred in a sequence, the form of which is defined in the SyncML specifications.

According to the invention, between the Bluetooth layers and the WLAN layers is arranged a virtual device (VD) 38. Towards the L2CAP layer the virtual device provides a Bluetooth Host Controller Interface (HCI). HCl is conventionally responsible for controller management, link establishment, and maintenance, and thus provides a uniform method of accessing any Bluetooth hardware.

On the other hand, towards the data link layer, the virtual device 38 acts as a network layer node. This means that the MAC layer forwards to the virtual device data fields of Ethernet frame, and the virtual device transforms the data to the format followed in the HCI interface. On the other hand, the virtual device receives data from L2CAP, and packages them into a data field of Ethernet frame. The MAC header is adjusted to recognize a Type-field that indicates that the type of data encapsulated is Bluetooth.

The essential characteristics of WLAN and Bluetooth map very easily to each other, and therefore this kind of direct transformation between Bluetooth and Ethernet is especially advantageous for embodying the present invention. Setting up a connection between two Bluetooth-enabled devices may involve two steps. The inquiry procedure enables a device to discover which devices are in range, and determine the addresses and clocks for the devices. After the inquiry procedure, a connection can be established using the paging procedure. If nothing is known about the other device, both procedures have to be followed, but if relevant details are available, only the paging procedure is needed. Connection setup in Bluetooth utilizes a Bluetooth device address, a unique 48-bit device address allocated to each Bluetooth transceiver. The length of the Ethernet addresses is 48 bits, which equals the length of the Bluetooth address. The virtual device may thus be configured to map the Bluetooth address and the Ethernet address directly with each other. Additionally, WLAN comprises functionality for scanning the surrounding networks. The virtual device may easily be arranged to transform the responses from the selected WLAN access point device as responses from a Bluetooth device that has allowed discovery.

In the embodiment of Figure 3, the mobile station moves within an area where an access point, here a personal computer comprising data for synchronization. The user initiates the SYNC ML application 37 in his or her mobile station, the Bluetooth address is typically stored in the mobile station. In the embodiment of Figure 3, the virtual device 38 acts towards the application as a HCl node. The L2CAP layer operates on the basis of channels, and data from the application is forwarded normally to the L2CAP layer and forwarded therefrom through HCI into the virtual device 38. Correspondingly, from the point of view of the WLAN connection, the virtual device 38 acts as a network layer node. Thus, the virtual device receives L2CAP packets from the application, transforms the data normally into Ethernet frames and forwards them to be transmitted over the WLAN radio.

The request is forwarded through a WLAN base station to the SYNC ML application in the personal computer. The application receives the request, and responds by sending a confirmation message to the address of the Bluetooth application in the mobile station of the user. In this other direction, the virtual device receives LLC Protocol Data Units (LPDU) received over the WLAN air interface, extracts the payload and encapsulates the data into a L2CAP packets. The virtual device directs L2CAP frames to a channel, after which they are transferred conventionally through the RFCOMM and OBEX layers to the application client for which the channel is allocated to. Towards L2CAP, the virtual device implements the functionality of the lower level Bluetooth layers. After this the synchronization may be implemented in a conventional manner through messages delivered between the mobile station and the personal computer.

By default, Bluetooth communication is not authenticated, and any Bluetooth device can talk to any other Bluetooth device. A Bluetooth device may, however, choose to require authentication to provide a particular service. Bluetooth authentication is typically done with PIN codes. A PIN code is an ASCII string up to 16 characters in length. Typically a user has to enter the same PIN code on both devices. Once user has entered the PIN code, both devices will generate a link key. After that the link key can be stored either in the devices themselves or in a permanent storage. Next time both devices will use previously generated link key.

The security of the utilization of application may be maintained also in the embodiments of the present invention. The virtual device 38 may be configured to detect that an application requires Bluetooth authentication. In such a case the virtual device initiates 802.1X PSK authentication using the PIN provided by the application as a key. In case the 802.1X authentication succeeds in the application server, and the operation is valid, the server application returns to the virtual device 38 information that allows the validation of the Bluetooth PIN towards the application.

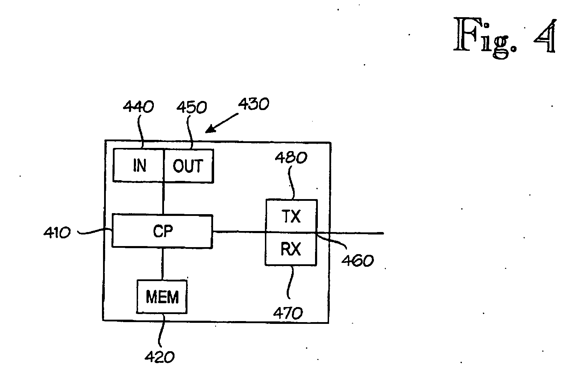

Figure 4 illustrates a functional description of user equipment UE applicable to be used as a mobile station in the above embodiments. The user equipment UE comprises processing means 410, an element that comprises an arithmetic logic unit, a number of special registers and control circuits. Connected to the processing means are memory means 420, a data medium where computer-readable data or programs or user data can be stored. The memory means typically comprise memory units that allow both reading and writing (RAM), and a memory whose contents can only be read (ROM). The user equipment UE also comprises a user interface block 430 with input means 440 for inputting data by the user for internal processing in the unit, and output means 450 for outputting user data from the internal processes of the unit. Examples of said input means comprise a keypad, or a touch screen, a microphone, or the like. Examples of said output means comprise a screen, a touch screen, a loudspeaker, or the like. The user equipment UE also comprises a communication unit 460 configured with receiving means 470 for receiving information from the air interface and processing it for inputting to the processing means 410, as well as with transmitting means 480 for receiving information from the processing means 410, and further processing it for sending via the air interface. The implementation of such a communication unit is generally known to a person skilled in the art. In the above described embodiments communication interface comprises a 801.11 -compliant WLAN functionality. The processing means 410, the memory means 420, the user interface block 430, and the communication unit 460 are electrically interconnected for performing systematic execution of operations on the received and/or stored data according to predefined, essentially programmed processes of the unit. In a solution according to the invention, the operations comprise the functionality of the mobile station as described above. Especially the processing means comprise a functionality for implementing the virtual device as disclosed in the above embodiments.

It will be obvious to a person skilled in the art that, as the technology advances, the inventive concept can be implemented in various ways. The invention and its embodiments are not limited to the examples described above but may vary within the scope of the claims.

## Claims

1. A method of wireless communication, comprising:
creating a local connection between a mobile station (17) and an access point (10, 11), **characterized by**
providing a Bluetooth serial port emulation for a terminal function;
transmitting messages of the terminal function between the mobile station (17) and the access point (10, 11) in an Ethernet-based connection;
utilizing within the mobile station (17) a virtual device (38) that
interfaces the Bluetooth serial port emulation and the Ethernet-based connection;
recognizes a Type-field that indicates that the type of data encapsulated is Bluetooth;
maps the Bluetooth address and the Ethernet address directly with each other.

2. A method as in claim 1, **characterized by** the access point (10, 11) being a computer or a mobile station equipped with WLAN connectivity.

3. A method as in claim 1 or claim 2, **characterized by** utilizing a Bluetooth functionality for the serial port emulation, and activating a Bluetooth application in the mobile station for implementing the terminal function.

4. A method as in claim 1, 2 or claim 3, **characterized by** utilizing a synchronization application configured to operate using OBEX functionality.

5. A communication system, comprising a mobile station (17), an access point (10,11), and a wireless interface for implementing a local connection between the mobile station and the access point, **characterized by**
the mobile station (17) comprising a virtual device that is configured to:
provide a Bluetooth serial port emulation for a terminal function;
interface the Bluetooth serial port emulation with an Ethernet-based connection;
recognize a Type-field that indicates that the type of data encapsulated is Bluetooth;
map the Bluetooth address and the Ethernet address directly with each other.

6. A communication system as in claim 5, **characterized by** the access point being a computer or a mobile station equipped with WLAN connectivity.

7. A mobile station comprising:
communication means (460) for creating a wireless Ethernet-based local connection to an access point, **characterized by**
a virtual device (410) that is configured to
provide a Bluetooth serial port emulation for a terminal function;
interface the serial port emulation with an Ethernet-based connection;
recognize a Type-field that indicates that the type of data encapsulated is Bluetooth;
map the Bluetooth address and the Ethernet address directly with each other.

8. A mobile station in claim 7, **characterized by** the virtual device being configured to operate between L2CAP layer and a WLAN Logical Link Layer.

9. A mobile station in claim 7, **characterized by** the terminal application being a Bluetooth synchronization application configured to operate using OBEX functionality.

10. A mobile station in claim 7, **characterized by** the terminal application being configured to download from the access point a local browser for browsing the local content maintained in the access point.

## Patentansprüche

1. Verfahren zur drahtlosen Kommunikation, umfassend:
Herstellen einer lokalen Verbindung zwischen einer Mobilstation (17) und einem Zugangspunkt (10,11),
**gekennzeichnet durch**
Bilden einer Bluetooth-Seriell-Port-Emulation für eine Terminal-Funktion;
Senden von Meldungen der Terminal-Funktion zwischen der Mobilstation (17) und dem Zugangspunkt (10,11) in einer Ethernet-basierten Verbindung;
in der Mobilstation (17), Verwenden einer virtuellen Vorrichtung (38), die
als Interface zwischen der Bluetooth-Seriell-Port-Emulation und der Ethernet-basierten Verbindung arbeitet;
ein Typ-Feld erkennt, welches angibt, dass es sich bei dem eingekapselten Daten-Typ um Bluetooth handelt;
die Bluetooth-Adresse und die Ethernet-Adresse direkt miteinander abbildet.

2. Verfahren nach Anspruch 1, **dadurch gekennzeichnet, dass** der Zugangspunkt (10,11) ein Computer oder eine Mobilstation ist, der bzw. die mit WLAN-Konnektivität versehen ist.

3. Verfahren nach Anspruch 1 oder Anspruch 2, **gekennzeichnet durch** Verwenden einer Bluetooth-Funktionalität für die Seriell-Port-Emulation, und **durch** Aktivieren einer Bluetooth-Applikation in der Mobilstation zum Implementieren der Terminal-Funktion.

4. Verfahren nach Anspruch 1, 2 oder Anspruch 3, **gekennzeichnet durch** Verwenden einer Synchronisations-Applikation, die zum Betrieb mittels OBEX-Funktionalität konfiguriert ist.

5. Kommunikationssystem mit einer Mobilstation (17), einem Zugangspunkt (10,11) und einem drahtlosen Interface zum Implementieren einer lokalen Verbindung zwischen der Mobilstation und dem Zugangspunkt, **dadurch gekennzeichnet, dass**
die Mobilstation (17) eine virtuelle Vorrichtung aufweist, die konfiguriert ist zum
Bilden einer Bluetooth-Seriell-Port-Emulation für eine Terminal-Funktion;
Interfacing der Bluetooth-Seriell-Port-Emulation mit einer Ethernet-basierten Verbindung;
Erkennen eines Typ-Felds, welches angibt, dass es sich bei dem eingekapselten Daten-Typ um Bluetooth handelt;
direkten Abbilden der Bluetooth-Adresse und der Ethernet-Adresse miteinander.

6. Kommunikationssystem nach Anspruch 5, **dadurch gekennzeichnet, dass** der Zugangspunkt ein Computer oder eine Mobilstation ist, der bzw. die mit WLAN-Konnektivität versehen ist.

7. Mobilstation mit:
einer Kommunikationsvorrichtung (460) zum Herstellen einer drahtlosen Ethernet-basierten lokalen Verbindung zu einem Zugangspunkt,
**gekennzeichnet durch**
eine virtuelle Vorrichtung (410), die konfiguriert ist zum
Bilden einer Bluetooth-Seriell-Port-Emulation für eine Terminal-Funktion;
Interfacing der Seriell-Port-Emulation mit einer Ethernet-basierten Verbindung;
Erkennen eines Typ-Felds, welches angibt, dass es sich bei dem eingekapselten Daten-Typ um Bluetooth handelt;
direkten Abbilden der Bluetooth-Adresse und der Ethernet-Adresse miteinander.

8. Mobilstation nach Anspruch 7, **dadurch gekennzeichnet, dass** die virtuelle Vorrichtung derart konfiguriert ist, dass sie zwischen einer L2CAP-Layer und einer WLAN-Logical-Link-Layer arbeitet.

9. Mobilstation nach Anspruch 7, **dadurch gekennzeichnet, dass** die Terminal-Applikation eine Bluetooth-Synchronisations-Applikation ist, die zum Betrieb mittels OBEX-Funktionalität konfiguriert ist.

10. Mobilstation nach Anspruch 7, **dadurch gekennzeichnet, dass** die Terminal-Applikation zum Downloaden eines lokalen Browsers aus dem Zugriffspunkt konfiguriert ist, um in dem im Zugriffspunkt enthaltenen lokalen Inhalt zu browsen.

## Revendications

1. Une méthode de communication sans fil, comprenant :
le fait de créer une connexion locale entre une station mobile (17) et un point d'accès (10, 11), **caractérisée par**
le fait de fournir une émulation de port série Bluetooth pour une fonction de terminal ;
le fait de transmettre des messages de la fonction de terminal entre la station mobile (17) et le point d'accès (10, 11) dans une connexion basée sur Ethernet ;
le fait d'utiliser au sein de la station mobile (17) un périphérique virtuel (38) qui
interface l'émulation de port série Bluetooth et la connexion basée sur Ethernet ;
reconnaît une zone type qui indique que le type de données encapsulées est compatible Bluetooth ;
mappe l'adresse Bluetooth et l'adresse Ethernet directement l'une à l'autre.

2. Une méthode telle que définie dans la revendication 1, **caractérisée par** le point d'accès (10, 11) étant un ordinateur ou une station mobile équipé d'une connectivité WLAN.

3. Une méthode telle que définie dans la revendication 1 ou la revendication 2, **caractérisée par** l'utilisation d'une fonctionnalité Bluetooth pour l'émulation du port série, et l'activation d'une application Bluetooth dans la station mobile pour la mise en oeuvre de la fonction de terminal.

4. Une méthode telle que définie dans la revendication 1, 2 ou la revendication 3, **caractérisée par** le fait d'utiliser une application de synchronisation configurée pour fonctionner en utilisant la fonctionnalité OBEX.

5. Un système de communication, comprenant une station mobile (17), un point d'accès (10, 11), et une interface sans fil pour mettre en oeuvre une connexion locale entre la station mobile et le point d'accès, **caractérisé par**
**le fait que** la station mobile (17) comprend un dispositif virtuel qui est configuré pour :
fournir une émulation de port série Bluetooth pour une fonction de terminal ;
interfacer l'émulation du port série Bluetooth avec une connexion basée sur Ethernet ;
reconnaître une zone type qui indique que le type de données encapsulées est compatible Bluetooth ;
mapper l'adresse Bluetooth et l'adresse Ethernet directement l'une avec l'autre.

6. Un système de communication selon la revendication 5, **caractérisé par le fait que** point d'accès est un ordinateur ou une station mobile équipé d'une connectivité WLAN.

7. Une station mobile comprenant :
des moyens de communication (460) pour la création d'une connexion locale sans fil basée sur Ethernet à un point d'accès, **caractérisé par**
un périphérique virtuel (410) qui est configuré pour
fournir une émulation de port série Bluetooth pour une fonction de terminal ;
interfacer l'émulation de port série avec une connexion basée sur Ethernet ;
reconnaître une zone type qui indique que le type de données encapsulées est compatible Bluetooth ;
mapper l'adresse Bluetooth et l'adresse Ethernet directement l'une avec l'autre.

8. Une station mobile selon la revendication 7, **caractérisée par le fait que** le dispositif virtuel est configuré pour fonctionner entre la couche L2CAP et une couche WLAN Logical Link.

9. Une station mobile selon la revendication 7, **caractérisée par le fait que** l'application du terminal est une application de synchronisation Bluetooth configurée pour fonctionner en utilisant la fonctionnalité OBEX.

10. Une station mobile selon la revendication 7, **caractérisée par le fait que** l'application du terminal est configurée pour télécharger à partir du point d'accès un navigateur local pour la navigation sur le contenu local maintenu dans le point d'accès.
